# EUROPEAN PATENT SPECIFICATION

(11) **EP 3 894 185 B1**
(45) Date of publication and mention of the grant of the patent: **08.03.2023**
(21) Application number: 19828328.5
(22) Date of filing: 16.12.2019
(51) Int. Cl.: B29C 64/129, B29C 64/386, B33Y 10/00, B29C 64/165, B33Y 50/00

(54) **METHOD OF BUILDING OBJECTS WITHIN A GREEN COMPACT OF POWDER MATERIAL BY ADDITIVE MANUFACTURING**
VERFAHREN ZUR HERSTELLUNG VON GEGENSTÄNDEN IN EINEM GRÜNLING AUS PULVERMATERIAL DURCH GENERATIVE FERTIGUNG
PROCÉDÉ DE CONSTRUCTION D'OBJETS À L'INTÉRIEUR D'UN CORPS CRU DE MATÉRIAU EN POUDRE PAR FABRICATION ADDITIVE

(30) Priority: 16.12.2018 US 201862780271 P
(43) Date of publication of application: 20.10.2021
(73) Proprietor: Stratasys Ltd., 7612401 Rehovot (IL)
(72) Inventor: HIRSCH, Shai, 7630521 Rehovot (IL); SHEINMAN, Yehoshua, 4359221 RaAnana (IL); SHTILERMAN, Stanislav, 7174769 ModiIn (IL)
(74) Representative: Studio Torta S.p.A.
(86) International application number: PCT/IL2019/051374
(87) International publication number: WO 2020/129054

(56) References cited:
- WO-A1-2018/118009
- US-A1- 2017 176 979
- US-A1- 2017 239 719
- US-A1- 2017 305 067
- US-A1- 2018 297 284
- US-B2- 9 573 323
- HENRIK SCHULZ ED - VALENTIN E BRIMKOV ET AL: "Polyhedral Surface Approximation of Non-convex Voxel Sets through the Modification of Convex Hulls", 7 April 2008 (2008-04-07), COMBINATORIAL IMAGE ANALYSIS; [LECTURE NOTES IN COMPUTER SCIENCE], SPRINGER BERLIN HEIDELBERG, BERLIN, HEIDELBERG, PAGE(S) 38 - 50, XP019087154, ISBN: 978-3-540-78274-2 the whole document
- MARIJN P. ZWIER ET AL: "Design for Additive Manufacturing: Automated Build Orientation Selection and Optimization", PROCEDIA CIRP, vol. 55, 2 November 2016 (2016-11-02), pages 128-133, XP055373404, NL ISSN: 2212-8271, DOI: 10.1016/j.procir.2016.08.040

## Description

### RELATED APPLICATION

This application claims the benefit of priority from U.S. Provisional Patent Application No. 62/780,271 filed on December 16, 2018, the contents of which are incorporated herein by reference in their entirety.

### FIELD AND BACKGROUND OF THE INVENTION

The present invention, as disclosed in claim 1, relates to a method of building one or more objects within a green compact formed by additive manufacturing.

Additive manufacturing (AM) is a technology enabling fabrication of arbitrarily shaped structures directly from computer data via additive formation steps. The basic operation of any AM system consists of slicing a three-dimensional computer model into thin cross sections, translating the result into two-dimensional data and feeding the data to control equipment which fabricates a three-dimensional structure in a layer-wise manner.

Additive manufacturing entails many different approaches to the method of fabrication, including three-dimensional (3D) printing such as 3D inkjet printing, electron beam melting, stereolithography, selective laser sintering, laminated object manufacturing, fused deposition modeling and others.

Some known 3D printing techniques selectively apply a liquid binder to a powdered material based on a 3D model of the object, binding the material together layer by layer to create a solid structure that forms the solid object. Another known 3D printing technique selectively applies a mask pattern with solidifiable material. The mask pattern defines the volume surrounding the object.

International Patent Application Publication No. WO2017/179052 of the same Applicant and entitled "Method and apparatus for additive manufacturing with powder material," describes a system for building a three-dimensional green compact. The system includes a printing station configured to print a mask pattern on a building surface, a powder delivery station configured to apply a layer of powder material on the mask pattern and a die compaction station for compacting the layer formed by the powder material and the mask pattern. The mask pattern is formed with solidifiable material. A stage repeatedly advances a building tray to each of the printing station, the powder delivery station and the die compaction station to build a plurality of layers that together form the three-dimensional green compact. The document US 2017/239719 A1 shows a three-dimensional (3D) printing methods, apparatuses, and systems using, inter alia, a controller that regulates formation of at least one 3D object (e.g., in real time during the 3D printing); and a non-transitory computer-readable medium facilitating the same. For example, a controller that regulates a deformation of at least a portion of the 3D object. The control may be in situ control. The control may be real-time control during the 3D printing process. For example, the control may be during a physical-attribute pulse. The present disclosure provides various methods, apparatuses, systems and software for estimating the fundamental length scale of a melt pool, and for various tools that increase the accuracy of the 3D printing.

### SUMMARY OF THE INVENTION

There is provided a method of building a green compact with one or more objects therein by additive manufacturing. The green compact is formed with layers of powder material that are selectively patterned with solidifiable material. According to some example embodiments, the method includes selecting an orientation for building an object and defining a mask pattern with the solidifiable material to form the object within the green compact in the selected orientation. The object may be a three-dimensional (3D) object formed over a plurality of layers. According to some example embodiments, the method additionally includes defining an accompanying mask pattern that divides sacrificial portions of the green compact into sections that can be separated from one another or removed to reveal the object(s) within the green compact.

According to some example embodiments, the objects and cut planes in the green compact may be defined with a pattern of solidifiable material printed in the green compact on a per layer basis. In some example embodiments, the solidifiable material is also applied to trace a convex hull around an object and to define a mask pattern in sacrificial portions within the convex hull, e.g. in concave portions of the objects, around complex portions of the object geometry and around delicate geometrical features of the object. The mask pattern in sacrificial portions within the convex hull may facilitate removing more fragile portions of the object/s from surrounding powder material in the green compact.

According to the invention, the orientation for building an object(s) is selected in a manner that distributes the solidifiable material substantially evenly or substantially uniformly throughout at least part of the green compact and/or over a Z height of the green compact, e.g. over a number of layers forming the green compact. According to some example embodiments, an orientation of an object is selected to avoid relatively large concentrations of solidifiable material in individual horizontal layers.

Optionally, a plurality of objects may be formed concurrently in a same green compact.

According to some example embodiments, the method additionally provides for nesting the plurality of objects within the green compact and defining cut planes within the green compact to enable separating the green compact into portions at the end of the layer building process, each portion including a different object embedded therein.

A method of the claimed invention is defined in the independent claim 1.

Optionally, the method includes identifying a cavity or concave portion in the at least one object; and defining an orientation of the at least one object so that the cavity extends at least partially over a Z height of the green compact.

According to the invention, the orientation of the at least one object is defined to increase uniform distribution of material forming the mask pattern over a Z height of the green compact.

Optionally, the method includes defining a convex hull around the at least one object; and defining a division of a volume between the at least one object and the convex hull into a plurality of sub-volumes.

Optionally, at least a portion of the division of the volume is defined to provide a selected draft angle.

Optionally, the division of the volume is sized and shaped to allow separating the at least one object from the green compact.

Optionally, the at least one object includes a plurality of objects and the method further comprising defining nesting of the plurality of objects within the green compact.

Each of the plurality of objects is defined to be nested in an orientation configured to increase uniform distribution of material forming the mask pattern over a Z height of the green compact.

Optionally, the at least one object includes a plurality of objects, wherein a convex hull is defined around each of the plurality of objects.

Optionally, the method includes defining a partition wall in the volume between the convex hull of each of the plurality of objects, wherein the partition wall is configured to be formed with the mask pattern.

Optionally, the partition wall is defined to be equidistant between the convex hull defined around each of the plurality of objects at each of a plurality of layers of the green compact.

Optionally, the mask pattern is configured to define a contour of the at least one object on a per layer basis.

Optionally, the mask pattern in configured to define a contour of a convex hull around the at least one object on a per layer basis.

According to the invention, the mask pattern is configured to define discrete volumes in the green compact that can be removed from the green compact at the end of the layer building process to reveal the at least one object.

Optionally, the mask pattern includes cut planes defined along main axes of a bounding box incorporating the at least one object.

Optionally, the cut planes are pattern to have a textured surface.

Optionally, the green compact is configured to be formed with layers of powder material patterned with a solidifiable material and wherein the solidifiable material is configured to define the mask pattern.

Optionally, the solidifiable material is non-powder material that is solid at ambient temperature and liquid at the moment of printing with a melting point of less than 120°C.

Optionally, said solidifiable material is a solidifiable ink selected from photocurable inks, wax, thermal inks and any combination thereof.

According to an aspect of some example embodiments, there is provided a method to form a green compact by additive manufacturing, wherein at least one object is embedded therein, the method comprising: selecting an orientation of the at least one object within the green compact of powder material, forming the green compact by additive manufacturing with the at least one object in the selected orientation, wherein the additive manufacturing includes printing a mask pattern, spreading a layer of powder material and compacting the layer and wherein the printing, spreading and compacting is performed for each layer formed in the green compact; and wherein the orientation selected is configured to increase uniform distribution of material forming the mask pattern over a Z height of the green compact.

Optionally, the mask pattern is configured to define shape of the at least one object.

Optionally, the mask pattern is configured to divide a portion of the green compact surrounding the at least one object into sub-volumes.

Optionally, the mask pattern includes a convex hull defined around the at least one object, wherein the sub-volumes are defined within the convex hull.

Optionally, the sub-volumes are configured to be separated from the at least one object to reveal the at least one object at the termination of the layer building process.

Optionally, the mask pattern includes cut planes defined along main axes of a bounding box incorporating the at least one object.

Optionally, the cut planes are pattern to have a textured surface.

Optionally, the method includes selecting orientation of each of a plurality of objects within the green compact of powder material; selecting nesting of the plurality of objects within the green compact in their selected orientation; and forming the green compact based on the orientations selected and the nesting selected.

Optionally, the method includes defining a partition wall between each of the plurality of objects within the green compact of powder material; and forming the partition wall with the mask pattern.

Optionally, the partition wall is defined to be equidistant from each of the plurality of objects on a per layer basis.

Optionally, the method includes defining a convex hull around each to the plurality of objects, wherein the partition wall is defined between each of the convex hulls.

Optionally, the mask pattern is printed with solidifiable material.

Optionally, the solidifiable material is non-powder material that is solid at ambient temperature and liquid at the moment of printing with a melting point of less than 120°C.

Optionally, said solidifiable material is a solidifiable ink selected from photocurable inks, wax, thermal inks and any combination thereof.

Optionally, the powder material is metal powder.

Optionally, the method includes heating the green compact, wherein the heating is configured to burn, liquefy or evaporate material forming the mask pattern; and revealing the at least one object in the green compact.

Optionally, the method includes sintering the at least one object.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWING(S)

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIGS. 1A, 1B, 1C, 1D, and 1E are simplified graphic illustrations of a series of example steps to select a desired orientation of an object to be formed in a green compact in accordance with some example embodiments;
FIG. 2 is a simplified flow chart of an example method to select a desired orientation in which an object is to be formed in a green compact in accordance with some example embodiments;
FIGS. 3A, 3B, 3C, 3D, and 3E are simplified graphic illustrations of a series of example steps to define a convex hull and an accompanying mask pattern surrounding an object to be formed in a green compact in accordance with some example embodiments;
FIG. 4 is a simplified flow chart of an example method to define a convex hull and an accompanying mask pattern surrounding an object to be formed in a green compact in accordance with some example embodiments;
FIGS. 5A, 5B, 5C, 5D, and 5E are simplified graphic illustrations of a series of example steps to define cut planes through a green compact all in accordance with some example embodiments;
FIG. 6 is a simplified flow chart of an example method to define cut planes through a green compact in accordance with some example embodiments;
FIGS. 7A, 7B, 7C, 7D, 7E, 7F, 7G and 7H are simplified graphic illustrations of a series of example steps to define construction of a green compact in accordance with some example embodiments;
FIG. 8 is a simplified flow chart of an example method to define construction of a green compact including a plurality of object in accordance with some example embodiments;
FIG. 9 is an example partition plane including a texture in accordance with some example embodiments; and
FIG. 10 is a simplified flow chart of an example method to define construction of a green compact including a single object in accordance with some example embodiments.

### DESCRIPTION OF SPECIFIC EMBODIMENTS OF THE INVENTION

The present invention, in some embodiments thereof, relates to additive manufacturing with layers of powdered material and, more particularly, but not exclusively, to a method of building one or more objects within a green compact formed by additive manufacturing.

As used herein, the term "solidifiable material" refers to material that is a liquid or can be liquefied to allow depositing and can be solidified when deposited on a building surface. An example of solidifiable material is a solidifiable ink, which is liquid when printed on a building surface and can be solidified on it. Non-limitative examples of solidifiable inks include, photocurable polymers (also referred to as "photopolymer material"), thermal inks (also referred to as "phase-change inks") an example of which is wax, and any combination thereof. Thermal ink and phase change ink as used herein are interchangeable terms and may be defined as a material that is solid at room temperature (e.g. about 25°C) has a melting point of less than 120°C, viscosity of less than 50cPs between the melting point temperature and 120°C and that evaporates with substantially no carbon traces at a temperature of above 100 °C. Substantially, no carbon traces is defined as less than wt. 5% or less than wt.1%. An example thermal ink has a melt temperature of between 55-65 °C, a working temperature of about 65-75°C; and the viscosity may be between 15-17cPs. The example thermal ink is configured to evaporate in response to heating leaving little or no carbon traces. As used herein, the term "solidifiable material" also refers to plastic filament material extruded through a nozzle as is known for example to be used in fused deposition modeling (FDM) and to materials that can be extruded/deposited via any kind of extruding means (e.g. Archimedes screw, piston, syringe) and having the required properties.

As used herein, the term "green compact" refers to a block formed by the successive compaction of layers formed by spreading powder material over a mask of solidifiable material. A green compact typically includes in its volume one or more objects to be built, also referred to as "green body(ies)", a supporting region surrounding the green body, and solidifiable material. The solidifiable material defines the contour of the green body and may be used to divide the supporting region into sub-regions that are more easily separated from the green body. When referring to a specific layer of the green compact, the green body appears as a "model area" (or "object area") and the supporting region appears as one or more "supporting area(s)".

As used herein, the terms "mask" and "mask pattern" interchangeably refer to a structure formed by the deposition of a solidifiable material onto a building surface (e.g. building tray, preceding layer). The mask pattern is generally applied to form solid structural elements such as lines, points, corners, perimeters, partitions, 3D structures or any other geometric structure that results from the solidification of the solidifiable material. The terms "mask" and "mask pattern" also refer to the dithered or dispersed solidifiable material. The solidifiable material may solidify either spontaneously or after activation of an external trigger, e.g. UV light.

As used herein, the term "printing station" or "3D printing station" includes any apparatus suitable to deposit one or more solidifiable materials on a building surface. The printing station may include a printhead, an extruder, and/or any other suitable means known in the art.

As used herein, sub-volume of powder material is a volume of powder material encapsulated with solidifiable material that is sacrificial.

According to some example embodiments, there is provided a method of building one or more 3D objects within a green compact, while maintaining a relatively low ratio of solidifiable material to powder material on a per-layer basis. Optionally and additionally, there is provided a method to form objects in a green compact while maintaining a relatively same ratio of solidifiable material to powder material in the different layers. Optionally and additionally, there is provided a method to form objects in a green compact with a relatively evenly dispersed distribution of solidifiable material throughout a volume of the green compact. Optionally and additionally, there is provided a method to form an object(s) in a green compact in an orientation that may conserve the quantity of solidifiable material per layer needed to form the object(s).

The additive manufacturing process may include compacting the green compact on a per layer basis. Furthermore, in some examples, further compacting may be performed at the end of the layer building process. Presence of the solidifiable material in a layer affects compressibility of the layer during compacting and may also affect the final density of the objects formed in the green compact. The effect on compressibility of a layer may be significant when the ratio of solidifiable material to powder material in the layer is relatively large and may be less significant when the ratio is relatively low. In some example embodiments, a working range is defined to be about 6-15%, e.g. 10% of the area of a layer including solidifiable material. Optionally, it is desirable to stay within the working range. A layer including a high ratio of solidifiable material to powder material may be less compressible than a layer including a low ratio. Compressibility of the layer may also be affected by a degree to which the solidifiable material is concentrated in a footprint of a layer. For example, a layer may be less compressible when the solidifiable material is concentrated in one area in the layer as opposed to dispersed across the layer. Different compressibility can lead to different shrinkage as well as variation in layer thickness under pressure (especially during compaction and/or compression steps, e.g. during printing and/or post-processing stages) and this non-uniform shrinkage can lead to shape warping and dimensional inaccuracies. In some example embodiments, when differences in density and/or compressibility is anticipated in the build volume, changes to the density and/or distribution of the solidifiable material within the green compact may be used to compensate for the differences and thereby reduce deformations in the object(s) being built.

In some example embodiments, density and distribution of the solidifiable material within the green compact may be further controlled by selectively varying a thickness of partitions formed in the sacrificial portions of the greens compact. In some example embodiments, thickness of a partitioning wall in the Z axis direction may varied by varying a resolution at which the solidifiable material is dispensed, e.g. varying the dots per inch (dpi), by diluting the number of pixels and/or by switching a certain percentage of the pixels from "ink" pixels to "blank" pixels. When the solidifiable material is dispensed more sparsely, less solidifiable material is dispensed. The solidifiable material spreads out more before coalescing with neighboring drops and thus forms a thinner construction in the Z axis direction. More compact dispensing includes more material and less spreading. This leads to a thicker construction in the Z axis direction.

The solidifiable material may provide a plurality of functions in the additive manufacturing process. In some example embodiments, the solidifiable material outlines a shape of the object on a per layer basis and thereby provides a structural separation between the powder forming the object in the green compact and the powder in the remainder of the green compact, e.g. the sacrificial portion of the green compact. In some example embodiments, the solidifiable material is additionally configured to define partitions, e.g. cut planes, partitioning walls, convex hulls, and sub-volumes in the sacrificial powder material surrounding the object and the partitions enable revealing the object (or more than one object) in the green compact, e.g. separating the object from the sacrificial portion(s). In some example embodiments, the partitions are defined with a textured surface. Optionally, the texture is configured to strengthen a bond with the surrounding sacrificial powder material and thereby avoid pre-mature separation of sacrificial portion(s). Pre-mature separation may occur for example while handling the green compact.

In some example embodiments, the solidifiable material configured to define smaller sub-volumes of sacrificial powder material in a convex hull, e.g. in cavities formed by the object geometry and/or around portions of the objects with delicate or complex geometries. In some example embodiments, the solidifiable material is additionally or alternatively dithered, e.g. scattered over an area of a layer and the dithering is configured to resist bonding of the powder within the dithered area during compaction.

According to some example embodiments, orientation of an object within a green compact is defined to provide a desired distribution of solidifiable material. In some example embodiments, over one stage of defining construction of the green compact, a desirable orientation of each object in the green compact is defined. The desirable orientation may be defined based on identifying planar surfaces in the 3D object and orienting the planer surfaces at an angle with respect to a Z axis. The Z axis as defined herein extends along a direction in which the layers forming the green compact are stacked. Optionally, the Z axis is perpendicular to a building surface on which the green compact is formed. In some example embodiments, cavities or concave portions of an object may also be identified and the desirable orientation may be defined to orient the cavity or concave portion across a plurality of layers.

In some example embodiments, a stage of defining construction of the green compact includes defining a convex hull around at least a portion of the objects in the green compact as well as a pattern of solidifiable material between the convex hull and surfaces of the object. Optionally, the pattern defines sub-volumes of sacrificial powder material within the convex hull. Optionally, the pattern is a dither pattern and/or may include a dither pattern. According to some example embodiments, a convex hull is defined to encapsulate each object and provide a separation between smaller sub-volumes of sacrificial powder material defined within the convex hall and larger partitions in sacrificial powder material outside the convex hall. Optionally, the convex hall is configured to protect the object from breaking when applying a force to remove the relatively large sacrificial portions of the green compact external to the convex hull. The pattern of solidifiable material within the convex hull create breaks in the powder material surrounding delicate portions of the object and facilitate removing surrounding powder material near the object without damaging complex and/or delicate geometrical features of the object.

In some example embodiments, yet another stage of defining construction of the green compact may be performed when a plurality of objects are configured to be printed concurrently in a same green compact. In some example embodiments, a nesting scheme may be defined. According to some example embodiments, the nesting scheme is configured to orient the objects in the green compact and relative to one another in a manner that will distribute the solidifiable material substantially evenly or substantially uniformly throughout the green compact. Optionally, the nesting scheme is performed on a defined convex hull of each object. In other examples, the nesting scheme allows positioning one object inside the convex hull of another with the limitation that the objects do not get stuck together or get unintentionally interlocked, e.g. with the limitation that two separate ring shaped objects do not cross one another. Optionally and preferably, a green compact including a plurality of objects is further patterned with a mask pattern that divides the green compact into sections, each section including a different object. Optionally, the sections are defined on a per-layer basis to be equidistant between facing sides of the object layer or the convex hull.

According to some example embodiments, a virtual green compact including a pattern of solidifable material is defined based on the methods described herein. The virtual green compact once defined may be sliced and data defining the slices may be used by an additive manufacturing system to construct the green compact.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The method and system of the present embodiments manufacture three-dimensional objects based on computer object data in a layerwise manner by forming a plurality of layers in a configured pattern corresponding to the shape of the objects. The computer object data can be in any known format, including, without limitation, a Standard Tessellation Language (STL) or a StereoLithography Contour (SLC) format, Virtual Reality Modeling Language (VRML), Additive Manufacturing File (AMF) format, Drawing Exchange Format (DXF), Polygon File Format (PLY) or any other format suitable for Computer-Aided Design (CAD).

The term "object" as used herein refers to a whole object or a part thereof.

As used herein the term "about" refers to ± 10 %.

The method and system of the present embodiments disclose manufacturing three-dimensional objects within a green compact in a layer-wise manner based on computer object data, by forming a plurality of layers in a configured pattern corresponding to the shape of the object/s and the pattern of solidifiable material surrounding the object/s, and/or defining sub-volumes around the object/s as described herein.

An exemplary system or systems for additive manufacture of an object according to the methods described herein is substantially as described in PCT Application Publication Numbers WO2017/179052 and WO2018/173050, both of the same Applicants, and incorporated herein by reference.

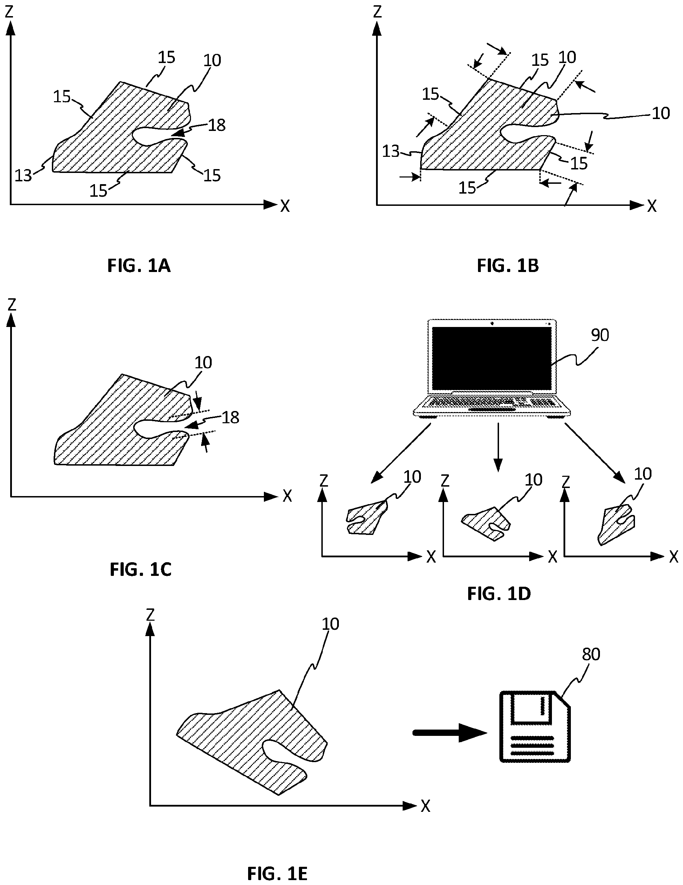

Reference is now made to FIGS. 1A, 1B, 1C, 1D, and 1E showing simplified graphic illustrations of a series of example steps to select a desired orientation for forming an object in a green compact in accordance with some example embodiments. According to some example embodiments, a 3D object **10** may be selectively oriented in a manner that distributes the solidifiable material evenly or uniformly over a Z height of the green compact, e.g. over a number of layers forming the green compact. The Z axis represents a direction along which layers of a green compact are stacked during construction of the green compact. Optionally, each layer is spread over an XY plane. For simplicity purposes FIGS. 1A, 1B, 1C, 1D and 1E depict an example cross section of an object **10** in an XZ plane.

Object **10** may include one or more planar surfaces 15, curved surfaces **13** and/or cavities **18**. In some example embodiments, it is desired to orient planar surfaces **15** at an angle with respect to the layers of the green compact, e.g. at a non-normal angle with respect to Z axis. In some example embodiments, it is similarly desired to orient cavities **18** at an angle with respect to the layers of the green compact. By angling planar surfaces **15** and/or cavities **18**, planar surfaces formed with solidifiable material may be spread across a plurality of layers and thereby more evenly distributed over a Z height.

In some example embodiments, a location, orientation and/or extent of each planar surface **15** may be identified (FIG. 1B). In addition, location, orientation and/or size of each cavity may be identified (FIG. 1C). A computing device **90** may determine a desired orientation for building object **10** within a green compact based on information related to the planar surfaces **15** and/or cavities **18** of object **10** (FIG. 1D). Optionally, spread of solidifiable material over a Z height may be computed for different orientations and an orientation providing the most uniform spread may be selected. Optionally, computing device **90** computes parameters that quantify the distribution of the solidifiable material throughout the green compact and the concentrations of solidifiable material in individual horizontal layers for each of a plurality of orientations. According to some example embodiments, the orientation that provides the best results (FIG. 1E) may be saved in memory **80** and used, e.g. retrieved for building object **10**.

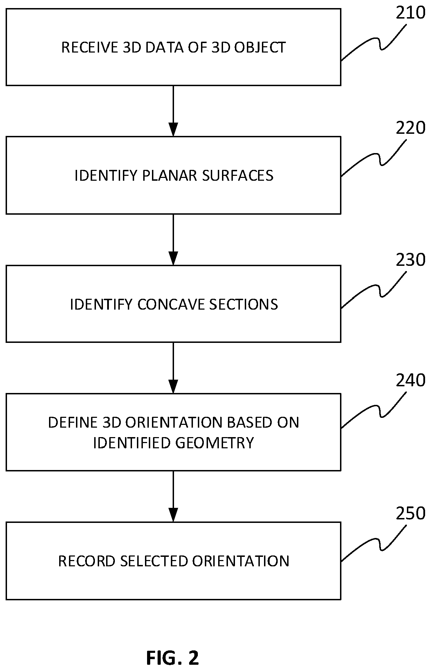

Reference is now made to FIG. 2 showing a simplified flow chart of an example method to select a desired orientation in which an object is to be formed in a green compact in accordance with some example embodiments. Data defining geometry of an object in 3D may be received by a computing device (block **210**). Optionally, the data is provided by a computer aided design software. According to some example embodiments, planar surfaces of the 3D object are identified based on the data received (block **220**). Optionally, size and orientation of each of the planar surfaces may also be identified and considered when selecting the desired orientation. In some example embodiments, one or more cavities defined by the 3D object are also identified (block **230**) and their size and orientation may also be identified and considered when selecting the desired orientation.

According to some example embodiments, an orientation of the 3D object within a green compact is defined based on a desired orientation of its planar surfaces and optionally is cavities with respect to the Z direction of the green compact (block **240**). Optionally, only planar surfaces larger than a defined threshold area and cavities larger than a defined volume are considered when defining orientation of the 3D object. According to some example embodiments, an orientation that provides substantially even distribution of the solidifiable material throughout the green compact and along the Z axis with substantially small concentrations of solidifiable material in individual horizontal layers is selected. According to some example, the defined orientation of the 3D object is recorded, i.e. stored for subsequent use in additive manufacturing of the object within a green compact (block **250**).

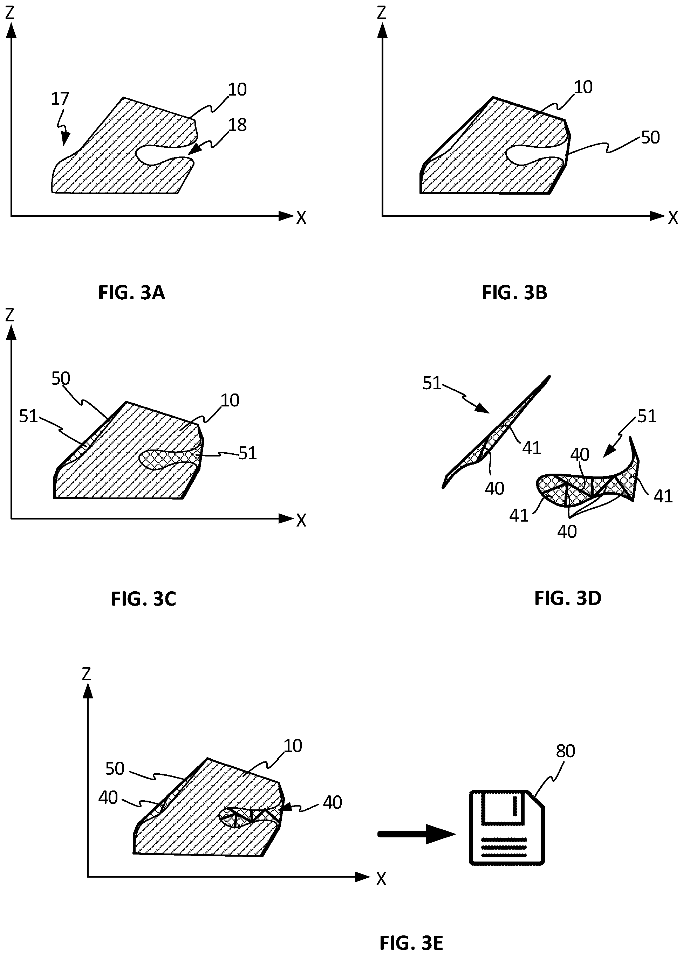

Reference is now made to FIGS. 3A, 3B, 3C, 3D, and 3E showing graphic illustrations of a series of example steps to define a convex hull and an accompanying mask pattern surrounding an object to be formed in a green compact in accordance with some example embodiments. An object **10** may include cavities **18**, portions **17** that may optionally form delicate features and/or complex geometries (FIG. 3A). According to some example embodiments, a convex hull **50** is defined around at least a portion of the object (FIG. 3B). According to some example embodiments, convex hull **50** may be configured to be defined with solidifiable material during manufacturing. At the end of the layer building process of the green compact, convex hull **50** including object **10** may be revealed prior to removing additional sacrificial material within convex hull **50** to reveal object **10** (FIG. 3B).

According to some example embodiments, once convex hull **50** is defined volumes of sacrificial powder material **51** within convex hull **50** may be identified (FIG. 3C) and a mask pattern of solidifiable material **40** may be defined within volumes **51** (FIG. 3D). In some example embodiments, pattern **40** defines sub-volumes of powder material **41** that may be disengaged from object **10** and/or released from a cavity **18**. A size and shape of the sub-volumes may be defined based on the 3D geometry of the object. For example, if a bottle neck is formed by a cavity **18** in object **10**, sub-volumes within cavity **18** may be sized and shaped to be released through the bottle neck. Optionally, a draft angle or other approach may be used. Alternatively and additionally, other algorithms are used to divide sub-volume **51** in removable sacrificial parts. In some example embodiments, the pattern of solidifiable material **40** may include a dither pattern that is configured to deter bonding of the powder material in selected portions. The dither pattern may be for example a random dispersion of solidifiable material that deters bonding of the powder material. Optionally, a dither pattern may be defined in a constricted portion of volume **51**. Optionally, when the solidifiable material is printed with an inkjet printer, thickness of lines or areas forming convex hull **50** and/or pattern **40** on a per layer basis may be controlled based on selecting density at which drops of material are dispensed. In some example embodiments, a mask pattern in 3D around object **10** that defines convex hull **50** as well as pattern **40** within convex hull may be saved in memory **80** and used, e.g. retrieved for building object **10** in a green compact (FIG. 3E).

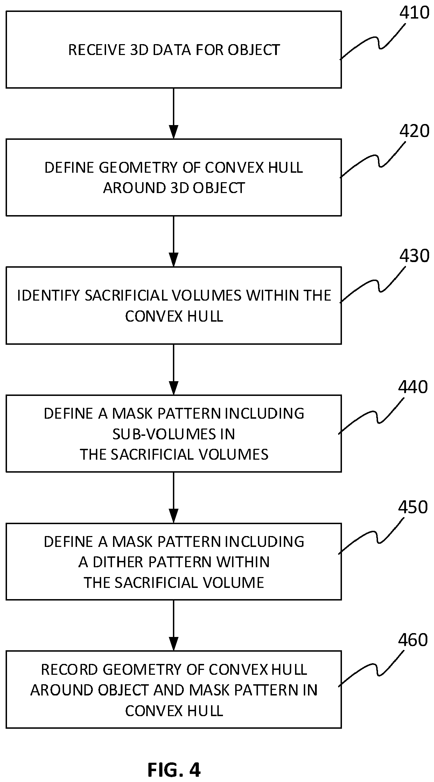

Reference is now made to FIG. 4 showing a simplified flow chart of an example method to define a convex hull and an accompanying mask pattern surrounding an object to be formed in a green compact in accordance with some example embodiments. Data defining geometry of an object in 3D may be received by a computing device (block **410**). According to some example embodiments, geometry of a convex hull around the object is defined (block **420**). In some example embodiments, sacrificial volumes within the convex hull are identified (block **430**). Optionally, a mask pattern is defined to divide the sacrificial volumes into sub-volumes that may be separated from the object after revealing the convex hull in the green compact (block **440**). Optionally, a draft angle rule is applied in defining shapes of the sub-volumes so that it may be released from the object during the revealing process. Optionally, a mask pattern including a dither of solidifiable material that deters bonding of sacrificial powder material in selected portions within the convex hull is defined (block **450**). Optionally, the sacrificial volume may be divided into volume filling shapes such as tetrahedrons or dodecahedral rhomboids. Optionally, the selected size of these volumes filling shapes depends on model geometry. According to some example embodiments, the 3D pattern of the convex hull and the pattern defined within the convex hull is recorded, for use in additive manufacturing of the object within a green compact (block **460**).

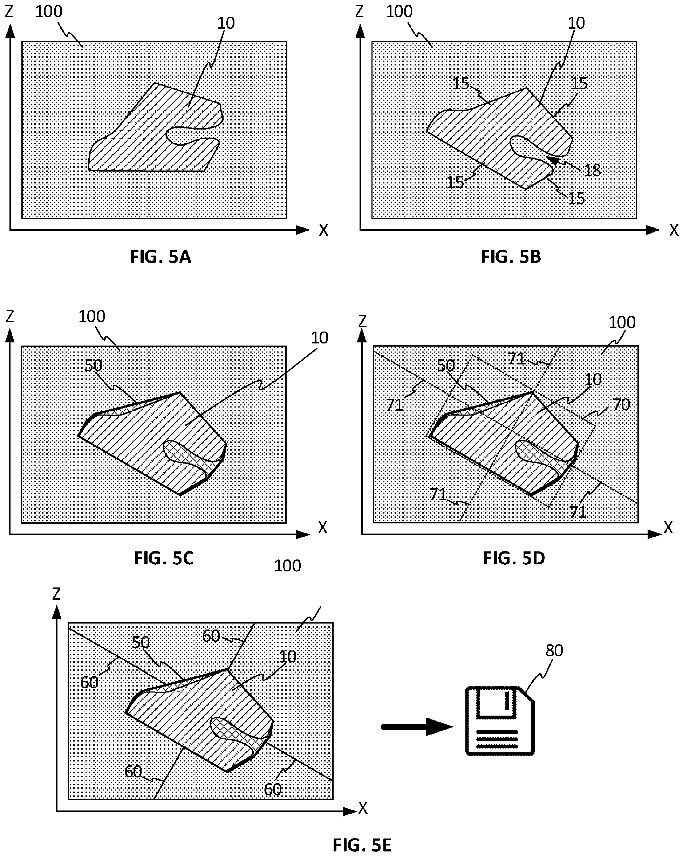

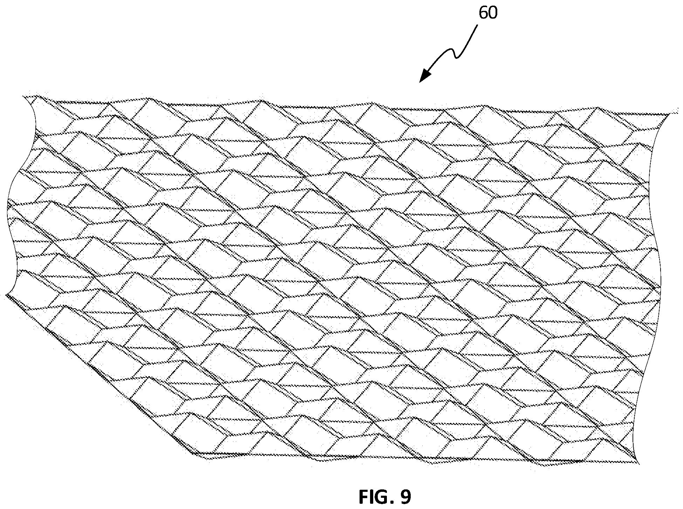

Reference is now made to FIGS. 5A, 5B, 5C, 5D, and 5E showing simplified graphic illustrations of a series of example steps to define cut planes through a green compact all in accordance with some example embodiments. According to some example embodiments, a green compact **100** may include one or more cut planes **60** that divide the powder material outside of object **10** into discrete sections so that object **10** can be easily extracted from green compact **100** at the end of the layer building process. According to some example embodiments, cut planes **60** are defined based on geometry of object **10** and its selected position and orientation within green compact **100**. According to some example embodiment, before defining location of the cut planes **60**, positioning of object **10** in green compact **100** is selected or retrieved (FIG. 5A). In some example embodiments, a desired orientation for building object **10** may be retrieved from storage **80** (FIG. 5B). Optionally, orientation of object **10** is defined based on the methods described for example in reference to FIGS. 1A-E and 2. In some example embodiments, a pattern for a convex hull **50** around object **10** may be retrieved (FIG. 5C). Convex hull **50** may be defined based on themethods described for example in reference to FIGS. 3A-E and 4. According to some example embodiments, a bounding box **70** is defined around convex hull **50** (or around object **10**) and cut planes **60** are defined in directions extending along main axes **71** of bounding box **70** (FIG. 5D). For simplicity purposes, only two of the three main axes **71** are depicted. A third main axis **71** may extend in a direction perpendicular to each of cut planes **71** depicted. According to some example embodiments, cut planes **60** extending from a surface of convex hull **50** to an edge of green compact **100** in a direction of axes **71** are defined and are configured to be constructed with solidifiable material during the layer building process. In some example embodiments, cut planes **60** may be defined to have a rough or bumpy texture. Texture imparted on cut planes **60** may provide a desired amount of resistance against portions of the sacrificial material breaking off of the green compact unintentionally for example while handling the green compact. One example texture for a cut plane **60** is shown in FIG. 9. Optionally, when the solidifiable material is printed with an inkjet printer, thickness of lines or areas forming cut planes **60** on a per layer basis may be controlled based on selecting density at which drops of material are dispensed. Data defining location and structure of each cut plane **60** may be saved in memory **80** and used, e.g. retrieved for building object **10** in green compact **100** (block 5E). Optionally, after defining the bounding box and the cut plane directions, the cut planes are placed at the extremum positions of object **10** in these directions, e.g. the positions where object **10** itself extends the farthest in the direction of bounding box **70**.

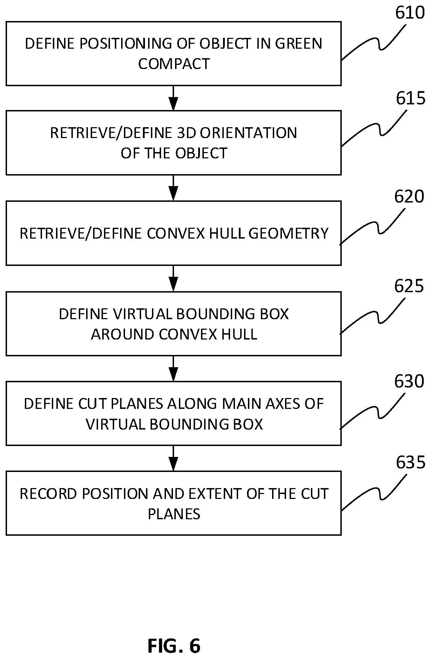

Reference is now made to FIG. 6 showing a simplified flow chart of an example method to define cut planes through a green compact in accordance with some example embodiments. According to some example embodiments, a location of an object **10** within a green compact is defined (block **610**). In some example embodiments, a desired orientation for building the object may be defined or retrieved from memory (block **615**). Optionally, a pattern to form a convex hull around the object is defined or retrieved from memory (block **620**). According to some example embodiments, a bounding box is virtually constructed around the convex hull (or the object) (block **625**). Based on orientation of the bounding box, the cut planes may be defined. According to some example embodiments, the cut planes are defined along main axes of the bounding box (block **640**) and are configured to extend from the convex hull to an edge of the green compact. According to some example embodiments, positioning and extent of the cutting planes is recorded, for use in additive manufacturing of the object within a green compact (block **635**).

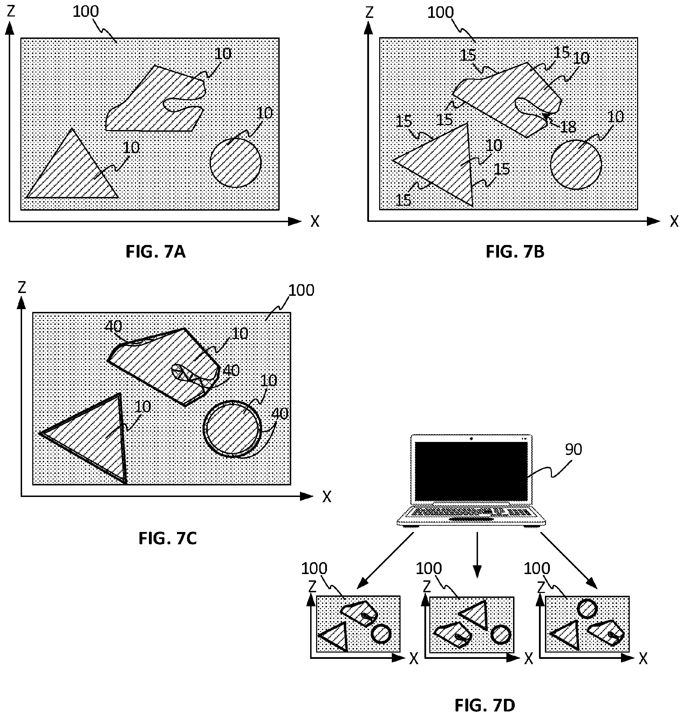

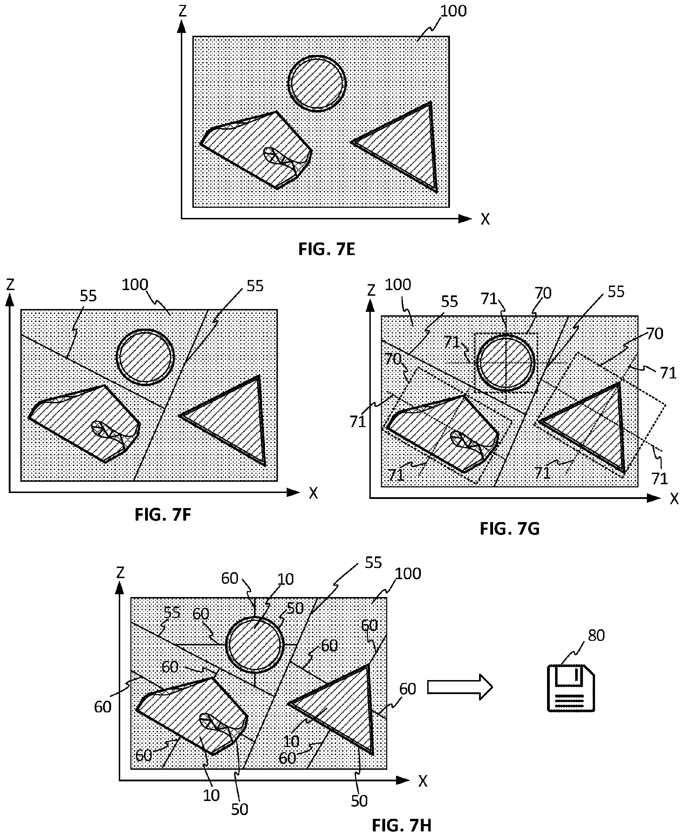

Reference is now made to 7A, 7B, 7C, 7D, 7E, 7F, 7G and 7H showing simplified graphic illustrations of a series of example steps to define construction of a green compact in accordance with some example embodiments. According to some example embodiments, a plurality of objects **10** may be selected to be built in a green compact **100** (FIG. 7A). In some example embodiments, a desired orientation for each of the objects may be determined or retrieved from memory (FIG. 7B). Optionally, a convex hull **50** is defined around each of objects **10**. Optionally, a pattern **40** between convex hull **50** and object **10** may be defined. According to some example embodiments, computing device **90** is configured to select nesting of objects **10** within a green compact. Optionally, computing device **90** may select a nesting that provides substantially uniform distribution of solidifiable material along a Z axis direction. Optionally, spread of solidifiable material over a Z height may be computed for different nesting arrangements. Optionally, computing device **90** computes parameters that quantify the distribution of the solidifiable material throughout the green compact and compares them for different nesting arrangements. Based on a selected nesting arrangement (FIG. 7E) partition walls **55** between objects **10** that are to be formed with solidifiable material may be defined (FIG. 7F). In some example embodiments, partition walls **55** are defined to be equidistant between at least two convex hulls **50** of objects **10** at each layer of the green compact and therefore are not planar partitions. Although partition walls **55** are shown as straight lines in the XZ plane for simplicity purposes, in some example embodiments, partition walls **55** may have complex or curved shapes along a Z direction to conserve an equidistant arrangement. According to some example embodiments, cut planes **60** are defined to extend for each object **10** to extend from its convex hull **50** to a partition wall **55**. Main axes **71** may be defined based on defining a bounding box around each object **10** and cut planes **60** along each of the three main axes of bounding box **70** as described for example in reference to FIGS. 5A-E and 6 (FIG. 7G). Optionally, when the solidifiable material is printed with an inkjet printer, thickness of lines or areas forming partition walls **55** on a per layer basis may be controlled based on selecting density at which drops of material are dispensed. The green compact including the objects **10,** convex hulls **50** with accompanying mask pattern **40**, cut planes **60** and partition walls **55** may be may be saved in memory **80** and used, e.g. retrieved for building objects **10** in green compact **100** (FIG. 7H).

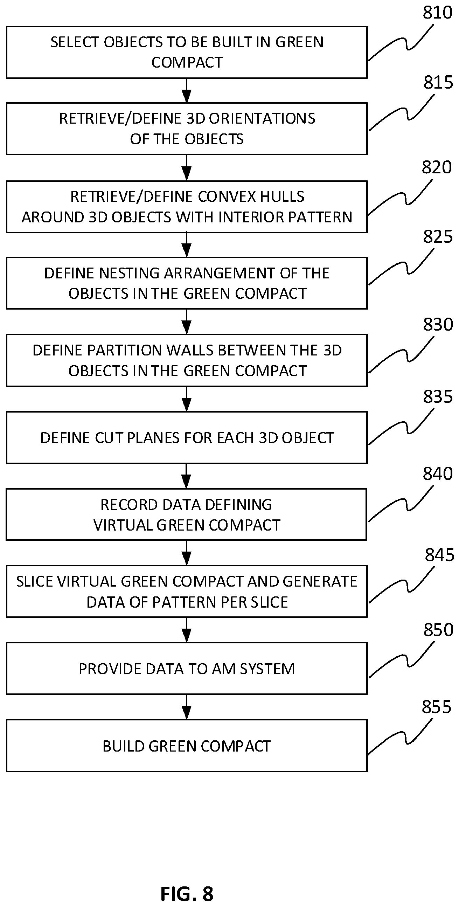

Reference is now made to FIG. 8 showing a simplified flow chart of an example method to define construction of a green compact including a plurality of object in accordance with some example embodiments. According to some example embodiments, a plurality of objects to be built in a green compact is selected (block **810**). In some example embodiments, a desired orientation for building each of the object may be defined or retrieved from memory (block **815**). Optionally, a pattern to form a convex hull around each of the object as well as a pattern within the convex hulls is defined or retrieved from memory (block **820**). According to some example embodiments, nesting of the objects are defined (block **825**). Optionally, the nesting selected is configured to provide substantially uniform distribution of solidifiable material along a Z axis direction. According to some example embodiments, partitioning walls are defined between each of the objects included in the green compact (block **830**). Optionally, the partition walls **55** are defined to be equidistant from at least two convex hulls **50** of objects **10** at each layer of the green compact. In some example embodiments, cutting planes **60** extend from the convex hull to the partition wall is defined or retrieved for each of the objects (block **835**). According to some example embodiments, the patterns defining, the object, the convex hull, the pattern within the convex hull, the cut planes and the partition walls are recorded, for use in additive manufacturing of the objects within a green compact (block **840**). The virtual green compact may be sliced to generate data for building each layer (block **845**). This data may be provided to an AM system (block **850**) and the green compact may be constructed (block **855**).

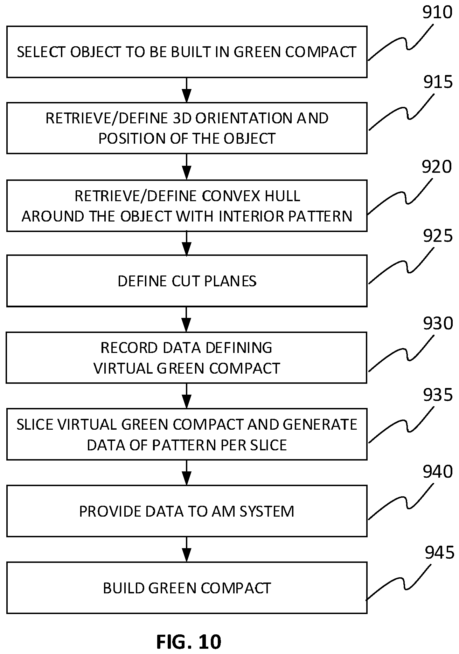

Reference is now made to FIG. 10 showing a simplified flow chart of an example method to define construction of a green compact including a single object in accordance with some example embodiments. According to some example embodiments, an object to be built in a green compact is selected (block **910**). In some example embodiments, a desired orientation for building the object may be defined or retrieved from memory (block **915**). Optionally, a pattern to form a convex hull around the object as well as a pattern within the convex hulls is defined or retrieved from memory (block **920**). In some example embodiments, cutting planes extend from the convex hull to an edge of the green compact is defined or retrieved for each of the objects (block 925). According to some example embodiments, the patterns defining the object, the convex hull, the pattern within the convex hull, and the cut planes are recorded for use in additive manufacturing of the objects within a green compact (block 930). The virtual green compact may be sliced to generate data for building each layer (block 935). This data may be provided to an AM system (block 940) and the green compact may be constructed (block 945).

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination or as suitable in any other described embodiment of the invention. Certain features described in the context of various embodiments are not to be considered essential features of those embodiments, unless the embodiment is inoperative without those elements.

## Claims

1. A method to define construction of a green compact (100) including at least one object (10) embedded therein, the method comprising:
receiving three-dimensional data defining the at least one object (10);
identifying a planar surface (15) in the at least one object (10) based on the three-dimensional data;
defining an orientation of the at least one object (10) so that the planar surface extends at least partially over a Z height of the green compact (100); and
defining a mask pattern (40) per layer to form the at least one object (10) in the defined orientation by an additive manufacturing process with powder material, wherein said mask pattern (40) defines a structure to be formed by deposition of a solidifiable material forming in the green compact (100) discrete volumes to be removed from the green compact (100) at the end of the layer building process for revealing the at least one object (10), and wherein the orientation of the at least one object (10) is selected to increase a distribution uniformity of said solidifiable material across a Z height of the green compact (100).

2. The method of claim 1, comprising:
identifying a cavity (18) or concave portion in the at least one object (10); and
defining an orientation of the at least one object (10) so that the cavity (18) extends at least partially over a Z height of the green compact (100).

3. The method of any one of claims 1 and 2 comprising:
defining a convex hull (50) around the at least one object (10); and
defining a division of a volume between the at least one object (10) and the convex hull (50) into a plurality of sub-volumes.

4. The method of claim 3, wherein at least a portion of the division of the volume is defined to provide a selected draft angle.

5. The method of claim 3 or claim 4, wherein the division of the volume is sized and shaped to allow separating the at least one object (10) from the green compact (100).

6. The method of any one of claims 1-5, wherein the at least one object (10) includes a plurality of objects and the method further comprising defining nesting of the plurality of objects within the green compact (100).

7. The method of claim 6, wherein each of the plurality of objects is defined to be nested in an orientation configured to increase uniform distribution of material forming the mask pattern (40) over a Z height of the green compact (100).

8. The method of any one of claims 1-7, wherein the at least one object (10) includes a plurality of objects, wherein a convex hull (50) is defined around each of the plurality of objects.

9. The method of claim 8, comprising defining a partition wall (55) in the volume between the convex hull (50) of each of the plurality of objects, wherein the partition wall (55) is configured to be formed with the mask pattern (40).

10. The method of claim 9, wherein the partition wall (55) is defined to be equidistant between the convex hull (50) defined around each of the plurality of objects at each of a plurality of layers of the green compact (100).

11. The method of any one of claims 1-10, wherein the mask pattern (40) is configured to define at least one of the group consisting of:
a contour of the at least one object (10) on a per layer basis; and
a contour of a convex hull (50) around the at least one object (10) on a per layer basis; .

12. The method of any one of claims 1-11, wherein the mask pattern (40) includes cut planes (60) defined along main axes of a bounding box (70) incorporating the at least one object (10).

13. The method of claim 12, wherein the cut planes (60) are pattern to have a textured surface.

14. The method of claim 1, wherein the green compact is configured to be formed with layers of powder material patterned with a solidifiable material to define the mask pattern (40) and wherein the solidifiable material is non-powder material that is solid at ambient temperature and liquid at the moment of printing with a melting point of less than 120°C and is selected from a group consisting of photocurable inks, wax, thermal inks and any combination thereof.

## Patentansprüche

1. Ein Verfahren zur Vorgabe der Konstruktion eines Grünlings (100) umfassend wenigstens ein Objekt (10), das darin eingebettet ist; wobei das Verfahren aufweist:
Erhalten dreidimensionaler Daten, die den wenigstens einen Gegenstand (10) vorgeben;
Identifizieren einer ebenen Fläche (15) in dem wenigstens einen auf den dreidimensionalen Daten basierenden Gegenstand (10);
Vorgeben einer Ausrichtung des wenigstens eines Gegenstandes (10), so dass sich die planare Oberfläche zumindest teilweise über eine Z-Höhe des Grünlings (100) erstreckt; und
Vorgeben eines Maskenmusters (40) pro Lage, um den wenigstens einen Gegenstand (10) in der vorgegebenen Ausrichtung durch einen zusätzlichen Herstellungsschritt mit Pulvermaterial zu formen, wobei dieses Maskenmuster (40) eine Struktur vorgibt, die durch das Abscheiden eines verdichtbaren in dem Grünling (100) diskrete Volumina formenden Materials geformt wird, die am Ende des Lagenaufbauprozesses von dem Grünling (100) entfernt werden, um den wenigstens einen Gegenstand (10) zu enthüllen, and wobei die Ausrichtung des wenigstens einen Gegenstandes (10) ausgewählt wird, um die Gleichmäßigkeit der Verteilung dieses verdichtbaren Materials über eine Z-Höhe des Grünlings (100) zu verbessern.

2. Das Verfahren nach Anspruch 1 aufweisend:
Identifizieren einer Kavität (18) oder eines konkaven Abschnitts in dem wenigstens einen Gegenstand (10); und
Vorgeben einer Orientierung des wenigstens einen Gegenstandes (10), so dass sich die Kavität (18) wenigsten teilweise über eine Z-Höhe des Grünlings (100) erstreckt.

3. Das Verfahren nach irgendeinem der Ansprüche 1 und 2 aufweisend:
Vorgeben einer konvexen Hülle (50) um den wenigstens einen Gegenstand (10); und Vorgeben einer Aufteilung eines Volumens zwischen dem wenigstens einen Gegenstand (10) und der konvexen Hülle (50) in eine Mehrzahl von Sub-Volumina.

4. Das Verfahren nach Anspruch 3, wobei wenigstens ein Abschnitt der Aufteilung des Volumens vorgegeben wird, um eine ausgewählte Entformungsschräge vorzusehen.

5. Das Verfahren nach Anspruch 3 oder Anspruch 4, wobei die Aufteilung des Volumens vermessen und geformt wird, um zu erlauben, den wenigstens einen Gegenstand (10) von dem Grünling (100) zu separieren.

6. Das Verfahren nach irgendeinem der Ansprüche 1 bis 5, wobei der wenigstens eine Gegenstand (10) eine Mehrzahl von Gegenständen umfasst und das Verfahren ferner das Vorgeben des Einsetzens der Mehrzahl der Gegenstände innerhalb des Grünlings (100) umfasst.

7. Das Verfahren nach Anspruch 6, wobei jeder der Mehrzahl der Gegenstände vorgegeben wird, um in einer Orientierung eingesetzt zu werden, die konfiguriert ist, um die gleichmäßige Verteilung des das Maskenmuster (40) formenden Materials über eine Z-Höhe des Grünlings (100) zu verbessern.

8. Das Verfahren nach irgendeinem der Ansprüche 1 bis 7, wobei der wenigstens eine Gegenstand (10) eine Mehrzahl von Gegenständen umfasst, wobei eine konvexe Hülle (50) um jeden der Mehrzahl der Gegenstände vorgegeben wird.

9. Das Verfahren nach Anspruch 8 aufweisend das Vorgeben einer Trennwand (55) in dem Volumen zwischen der konvexen Hülle (50) jedes Gegenstandes der Mehrzahl der Gegenstände, wobei die Trennwand (55) konfiguriert ist, mit einem Maskenmuster (40) geformt zu werden.

10. Das Verfahren nach Anspruch 9, wobei die Trennwand (55) vorgegeben wird, um äquidistant zwischen der konvexen Hülle (50), die um jeden der Mehrzahl der Gegenstände an jeder einer Mehrzahl von Lagen des Grünlings (100) vorgegeben ist, zu sein.

11. Das Verfahren nach irgendeinem der Ansprüche 1 bis 10, wobei das Maskenmuster (40) konfiguriert ist, wenigstens eine Gruppe vorzugeben, die besteht aus:
einer Kontur des wenigstens einen Gegenstandes (10) auf einer Lage für Lage Basis;
einer Kontur einer konvexen Hülle (50) um das wenigstens eine Objekt (10) auf einer Lage für Lage Basis.

12. Das Verfahren nach irgendeinem der Ansprüche 1 bis 11, wobei das Maskenmuster (40) Schnittflächen (60) umfasst, die entlang von Hauptachsen eines Begrenzungs-Rahmens (70) vorgegeben sind, der den wenigstens einen Gegenstand (10) enthält.

13. Das Verfahren nach Anspruch 12, wobei die Schnittflächen (60) Muster sind, die eine texturierte Oberfläche haben.

14. Das Verfahren nach Anspruch 1, wobei der Grünling mit Lagen von Pulvermaterial geformt ist, das mit einem verdichtbaren Material gemustert ist, um das Maskenmuster (40) vorzugeben, und wobei das verdichtbare Material ein nicht pulverförmiges Material ist, das bei Umgebungstemperatur fest ist und im Augenblick des Druckens mit einem Schmelzpunkt von weniger als 120°C flüssig ist und aus einer Gruppe bestehend aus fotovernetzbaren Tinten, Wachs, thermischen Tinten und jeder Kombination davon ausgewählt ist.

## Revendications

1. Méthode pour définir une construction d'un corps cru (100) comportant au moins un objet (10) incorporé dans celui-ci, le procédé comprenant ;
la réception de données tridimensionnelles définissant l'au moins un objet (10) ;
l'identification d'une surface plane (15) dans l'au moins un objet (10) sur la base des données tridimensionnelles ;
la définition d'une orientation de l'au moins un objet (10) de sorte que la surface plane s'étende au moins partiellement sur une hauteur Z du corps cru (100) ; et
la définition d'un motif de masque (40) par couche pour former l'au moins un objet (10) dans l'orientation définie par un procédé de fabrication additive avec un matériau en poudre, dans laquelle ledit motif de masque (40) définit une structure à former par dépôt d'un matériau solidifiable formant, dans le corps cru (100), des volumes discrets à enlever du corps cru (100) à la fin du procédé de construction de couche pour révéler l'au moins un objet (10), et dans laquelle l'orientation de l'au moins un objet (10) est sélectionnée pour augmenter une uniformité de répartition dudit matériau solidifiable à travers une hauteur Z du corps cru (100).

2. Méthode selon la revendication 1, comprenant :
l'identification d'une cavité (18) ou d'une partie concave dans l'au moins un objet (10) ; et
la définition d'une orientation de l'au moins un objet (10) de sorte que la cavité (18) s'étende au moins partiellement sur une hauteur Z du corps cru (100) .

3. Méthode selon la revendication 1 ou 2, comprenant :
la définition d'une coque convexe (50) autour de l'au moins un objet (10) ; et
la définition d'une division d'un volume entre l'au moins un objet (10) et la coque convexe (50) en une pluralité de sous-volumes.

4. Méthode selon la revendication 3, dans laquelle au moins une partie de la division du volume est définie pour fournir un angle de dépouille sélectionné.

5. Méthode selon la revendication 3 ou 4, dans laquelle la division du volume est dimensionnée et façonnée pour permettre la séparation de l'au moins un objet (10) du corps cru (100).

6. Méthode selon l'une quelconque des revendications 1 à 5, dans laquelle l'au moins un objet (10) comporte une pluralité d'objets et le procédé comprenant en outre la définition d'une imbrication de la pluralité d'objets à l'intérieur du corps cru (100).

7. Méthode selon la revendication 6, dans laquelle chacun de la pluralité d'objets est défini pour être imbriqué dans une orientation configurée pour augmenter une répartition uniforme de matériau formant le motif de masque (40) sur une hauteur Z du corps cru (100).

8. Méthode selon l'une quelconque des revendications 1 à 7, dans laquelle l'au moins un objet (10) comporte une pluralité d'objets, dans laquelle une coque convexe (50) est définie autour de chacun de la pluralité d'objets.

9. Méthode selon la revendication 8, comprenant la définition d'une cloison (55) dans le volume entre la coque convexe (50) de chacun de la pluralité d'objets, dans laquelle la cloison (55) est configurée pour être formée avec le motif de masque (40).

10. Méthode selon la revendication 9, dans laquelle la cloison (55) est définie pour être équidistant entre la coque convexe (50) définie autour de chacun de la pluralité d'objets au niveau de chacune d'une pluralité de couches du corps cru (100).

11. Méthode selon l'une quelconque des revendications 1 à 10, dans laquelle le motif de masque (40) est configuré pour définir au moins l'un du groupe se composant de :
un contour de l'au moins un objet (10) sur une base par couche ; et
un contour d'une coque convexe (50) autour de l'au moins un objet (10) sur une base par couche.

12. Méthode selon l'une quelconque des revendications 1 à 11, dans laquelle le motif de masque (40) comporte des plans de coupe (60) définis le long d'axes principaux d'une boîte de délimitation (70) englobant l'au moins un objet (10).

13. Méthode selon la revendication 12, dans laquelle les plans de coupe (60) sont à motif pour avoir une surface texturée.

14. Méthode selon la revendication 1, dans laquelle le corps cru est configuré pour être formé avec des couches de matériaux en poudre à motif avec un matériau solidifiable pour définir le motif de masque (40) et dans laquelle le matériau solidifiable est un matériau non-poudre qui est solide à température ambiante et liquide au moment de l'impression avec un point de fusion inférieur à 120 °C et est sélectionné dans un groupe se composant d'encres photodurcissables, de cire, d'encres thermiques et de toute combinaison de celles-ci.
